# EUROPEAN PATENT APPLICATION

(11) **EP 4 645 796 A1**
(43) Date of publication of application: **05.11.2025**
(21) Application number: 24173035.7
(22) Date of filing: 29.04.2024
(51) Int. Cl.: H04L 41/0816, G05B 19/042, G06F 8/71, G06F 9/445, H04L 41/082, H04L 41/0859, H04L 41/0895, H04L 41/40

(54) **SYSTEM AND METHOD FOR GITOPS ORCHESTRATION OF DISTRIBUTED CONTROL SYSTEMS**

(71) Applicant: ABB SCHWEIZ AG, 5400 Baden (CH)
(72) Inventor: KOZIOLEK, Heiko, 76227 Karlsruhe (DE); LINSBAUER, Sofia, 69221 Dossenheim (DE); HARK, Rhaban, 64347 Griesheim (DE)
(74) Representative: Maiwald GmbH

(57) **Abstract**

There is disclosed a method for changing a configuration of a distributed control system, DCS, associated with a production process in industrial plant, the method comprising: obtaining, at a system orchestrator associated with the DCS, wherein the DCS has a first configuration, first data indicative of a second configuration to be applied at the DCS; applying changes on the first configuration based on the second configuration as a first target configuration; determining, based on predetermined determination criteria, whether to reverse at least part of the applied changes; based on a result of the determining, obtaining second data indicative of a historic configuration of the DCS from a versioning repository in which data indicative of historic configurations of the DCS comprising at least the first configuration are stored; and reversing at least part of the applied changes based on using at least part of the obtained historic configuration as a second target configuration.

## Description

### FIELD OF THE INVENTION

The invention relates to a system and method for GitOps Orchestration of Distributed Control Systems.

### BACKGROUND

The configuration of software- and hardware-components of a distributed control system (DCS) undergoes continuous changes, for example to replace malfunctioning hardware, to change the software to new requirements of the production process, or to remove security vulnerabilities. This is an increasing challenge for DCSs with vast amounts of virtualized computing resources that allow for dynamic systems with continuous change. If a configuration change leaves the system in a fail-state or even affects the control production processes, it is not easily possible to bring the system back into a working state since the configuration changes would have to be carefully reversed manually. Moreover, configuration changes spanning an information technology (IT) infrastructure must not require a plethora of different configuration tools to not overburden DCS users.

Hence, there are several drawbacks available regarding the changing of software- and hardware-components of a DCS. Thus, there is room and need for improvement.

### SUMMARY

In view of the above, it is an object of the present disclosure to overcome at least part of the drawbacks available regarding the changing of software- and hardware-components of a DCS.

Therefore, to address one or more of these drawbacks, there is provided, in a first aspect, a method for changing a configuration of a DCS running at least partially in a cloud-native infrastructure and associated with a production process in industrial plant. The method comprises obtaining, at a system orchestrator associated with the DCS, wherein the DCS has a first configuration, first data indicative of a second configuration to be applied at the DCS. The method further comprises applying changes on the first configuration based on the second configuration as a first target configuration. The method further comprises determining, based on predetermined determination criteria, whether to reverse at least part of the applied changes. The method further comprises, based on a result of the determining, obtaining second data indicative of a historic configuration of the DCS from a versioning repository in which data indicative of historic configurations of the DCS comprising at least the first configuration are stored. The method further comprises reversing at least part of the applied changes based on using at least part of the obtained historic configuration as a second target configuration.

It shall be noted that not necessarily everything of the DCS may be running in a cloud-native environment. Specifically, also non-cloud resources are targeted, which may be a difference to existing GitOps solutions, for example.

Obtaining the first data may comprise obtaining the second configuration, obtaining the second data may comprise obtaining the historic configuration. The versioning repository storing data indicative of the historic configurations may comprise the versioning repository storing the historic configurations.

It shall further be noted that the first configuration may be a current configuration, that the second configuration may be a first target configuration, and that the historic configuration may be a second target configuration with the first target configuration representing a current configuration for the second target configuration. The historic configuration may be the first configuration. The first configuration or current configuration may be a default configuration. The DCS being in a default configuration shall be understood as also comprising the DCS not being in any configuration at all, but starting from an unconfigured state, for example when bootstrapping the whole DCS. Furthermore, the DCS having a first configuration may also be understood as the DCS being in a first state. The first state may be indicative of the first configuration. Thus, the second configuration being obtained may be understood as obtaining a configuration, notification, indication or request, wherein the obtained configuration, notification, indication or request may be indicative of a second state to be applied at the DCS. Hence, the applying changes may be understood as changing the first state based on the second state as a first target state. Moreover, the obtaining the historic configuration may be understood as obtaining a historic state.

Further, the changes to be applied may be understood to represent configuration changes.

It shall further be noted that reversing may be understood as comprising to reverse or to undo at least part of the changes applied, so that for software components and hardware components, for which their first configurations were changed to their respective second configurations, these second configurations are reversed, set back or adjusted back to their respective first configurations.

In view thereof, it shall be noted that the second configuration or at least part of the second configuration may be rolled back to any previous historic configuration or any corresponding part of the previous historic configuration. By "corresponding" it may be meant the similar or equivalent software and/or hardware components affected in the part of the second configuration and in the part of the historic (or first) configuration.

It shall further be noted that, according to several examples of the present disclosure, to outline the term "configuration" in more detail, the following is to be considered. Namely, hardware cannot be changed through the orchestrator, however, the configuration, i.e. parameters in the hardware, can be changed. This may include servers, industry PCs, network equipment, sensors. Software can be changed entirely, assuming there is some way to interact with the hardware hosting it, which is usually done using a remote command line interface of an already installed operating system. Other ways are of course possible. Typically, with configuring software it means to either entirely exchange software components or to change parameters in the software components. This may typically include Software-Logic-Controllers, supervisory monitoring tools, etc.

The method according to the first aspect is advantageous in that it may participate in enabling for safely and/or securely changing a configuration of a DCS, in more detail for safely changing software- and/or hardware-components of the DCS. Hence, the method allows flexibly adapting a DCS Runtime Infrastructure of the DCS and applications in a safe manner. This is enabled since there is provided the ability to roll-back failed configuration changes quickly and to benefit from the GitOps paradigm in a DCS context. Moreover, it is enabled a shorter recovery time in case of software or hardware failures due to configuration changes, based on hardware failures being addressed with re-deployments in the cluster, for example. In addition, rolling back to a historic and potentially best suitable configuration is enabled. "Best suitable" for example with regard to a scheduled process to be performed at the plant.

According to several examples of the present disclosure, the applying may comprise comparing the second configuration to the first configuration; based on the comparing, obtaining a change model indicative of the changes to be applied on the first configuration to arrive at the second configuration; and applying at least part of the changes indicated in the change model and/or rejecting at least part of the changes indicated in the change model.

It shall be noted that the comparing may be understood as comparing the second state to the first state. The change model may be obtained based on changes to be applied on the first state in order to arrive at the second state. Moreover, the change model may be of any form or type, which enables to indicate the changes to be applied on the first configuration.

Hence, changes to be applied may be clearly identified. Thus, a tracking and/or controlling of individual changes is made easier.

According to several examples of the present disclosure, the method may further comprise performing a security check regarding the changes to be applied on the first configuration based on considering at least one of production process data associated with the production process and DCS-specific information sources; and performing the applying based on a result of the security check.

It shall be noted that production process data may comprise, for example, production periods, idle periods, an order of different production processes, etc. Furthermore, DCS-specific information sources may be understood to represent sensors or cameras, for example. It shall further be noted that in case the result of the performed security check is positive, i.e. at least part of the intended changes may be applied, these changes will be applied or will be scheduled for being applied. Similar, in case the result of the performed security check is negative, i.e. at least part of the intended changes may be rejected, these changes will not be applied and the corresponding configuration or corresponding configuration part of the first configuration ("corresponding" means the configuration part, which was intended to be changed but is now rejected) is maintained.

Hence, the method according to the first aspect is further advantageous in that it may participate in enabling for safely and/or securely changing a configuration of a DCS, which, for example, includes to select an appropriate time for applying the changes considering the industrial process, considering hardware limitations in terms of thresholds in allocatable memory, CPU utilization, etc., or with regard to checking changes towards their security as part of an information technology system.

According to several examples of the present disclosure, the comparing may comprise comparing the second configuration of software components and/or hardware components of the DCS to the first configuration of the software components and/or the hardware components of the DCS. Additionally or alternatively, the changes to be applied on the first configuration to arrive at the second configuration may comprise changes to be applied on the first configuration of at least part of software components and/or hardware components of the DCS to arrive at the second configuration for the at least part of the software components and/or the hardware components of the DCS. Additionally or alternatively, the applying may comprise changing the first configuration of at least part of software components and/or hardware components of the DCS, wherein the rejecting may comprise maintaining the first configuration of at least part of the software components and/or the hardware components of the DCS.

It shall be noted that by software components and hardware components, it may be meant all components, variables and/or parameters to be controlled by system orchestration. For example, a number of active servers, an amount of available or shared resources, rules for security and/or anomaly detection, a measurement sequence to be performed by a sensor, camera and/or any measurement unit, logic controllers, supervisory software, etc. Thus, by changing a configuration of such software components and hardware components, it may be meant to change at least part of the components, variables and/or parameters to be controlled by system orchestration. For example, to change a number of active servers, to change an amount of available or shared resources, to change rules for security and/or anomaly detection, to change a measurement sequence to be performed by a sensor, camera and/or any measurement unit, etc.

Hence, comprehensive changes or adaptations can be carried out in a targeted and application-specific manner. Fine-tuning and optimizing of production processes is further improved. Hence, efficiency, security, robustness and reliability is increased.

According to several examples of the present disclosure, the obtaining the first data may comprise pulling the second configuration from the versioning repository.

It shall be noted that by versioning repository, it may also be meant a repository or a Git repository.

Hence, a fast configuration updating is enabled.

According to several examples of the present disclosure, the comparing may comprise comparing the second configuration to an instance model which reflects a live state of the DCS and/or a DCS runtime infrastructure associated with the DCS and which comprises the first configuration. Additionally or alternatively, the applying may comprise merging the change model into the instance model, and updating the DCS and/or the DCS runtime infrastructure by synchronizing the changes indicated in the change model with the DCS and/or the DCS runtime infrastructure.

It shall be noted that, since the instance model reflects a live state of the DCS and/or the DCS runtime infrastructure, the instance model as such may not be updated. Rather, the DCS and/or the DCS runtime infrastructure may be updated, in more detail a configuration of the DCS and/or the DCS runtime infrastructure may be updated (i.e. changed), and the instance model may show such updating. It shall further be noted that such updating or changing of a configuration may comprise several updating or changing steps and may be performed over a certain time period. Hence, the instance model may show, due to the synchronizing, a status of the updating or changing.

Moreover, "merging" may be understood in that it is determined what to be changed at the current configuration and how to change it, so that by merging the change model into the instance model, the second configuration or target configuration is obtained.

Hence, updating the DCS and/or the DCS runtime infrastructure may be performed in a structured and controlled manner. Moreover, a progress or status of the updating may be monitored, so that potentially identified errors may be more easily matched to individual updating steps.

According to several examples of the present disclosure, the applying may comprise scheduling application of at least part of the changes indicated in the change model under consideration of processing periods and/or idle periods of the production process. Additionally or alternatively, the rejecting may comprise rejecting at least part of the changes indicated in the change model under consideration of the processing periods and/or idle periods of the production process.

It shall be noted that under consideration of processing periods and/or idle periods, it may be meant that changes may be applied in case a production is in idle mode or in an idle period, wherein changes may be rejected in processing mode or in a processing period.

Hence, an application of changes may be scheduled as appropriate. Thus, reliability, safety and robustness of production processes are ensured.

According to several examples of the present disclosure, the method may further comprise applying the method in a GitOps Orchestration System. Additionally or alternatively, the applying and/or rejecting may comprise applying and/or rejecting changes in at least one area of areas covered by system orchestration, the areas comprising application management, security management, network management and system management.

Hence, a variety of potential changes is increased. Thus, further optimizing or fine-tuning of a production process is enabled.

According to several examples of the present disclosure, the method may further comprise, based on the applying, synchronizing changes applied on the first configuration with the versioning repository.

Hence, the versioning of the configuration history is further improved.

According to a second aspect, there is provided a method for storing configurations of a DCS running in a cloud-native infrastructure and associated with a production process in industrial plant. The method comprises obtaining, at a versioning repository associated with the DCS, wherein the DCS is in a first configuration, first data indicative of a second configuration to be applied at the DCS. The method further comprises storing the first data in a database comprising at least data indicative of the first configuration. The method further comprises providing second data indicative of the second configuration to a system orchestrator associated with the DCS.

Obtaining the first data indicative of the second configuration may comprise obtaining the second configuration. Providing the second data indicative of the second configuration may comprise providing the second configuration. Storing the first data may comprise storing the second configuration. Comprising at least data indicative of the first configuration may be understood as comprising at least the first configuration. The first data may be the same as the second data.

The method according to the second aspect is advantageous in that it may participate in enabling for safely and/or securely changing a configuration of a DCS, in more detail for safely changing software- and/or hardware-components of the DCS. Hence, the method allows flexibly adapting a DCS Runtime Infrastructure of the DCS and applications in a safe manner. This is enabled since there is provided the ability to roll-back failed configuration changes quickly and to benefit from the GitOps paradigm in a DCS context. Moreover, it is enabled a shorter recovery time in case of software or hardware failures due to configuration changes, based on hardware failures being addressed with re-deployments in the cluster, for example. In addition, rolling back to a historic and potentially best suitable configuration is enabled. "Best suitable" for example with regard to a scheduled process to be performed at the plant.

According to several examples of the present disclosure, the obtaining the first data may comprise obtaining configuration changes to be applied on the first configuration. Additionally or alternatively, the obtaining the first data may comprise obtaining the first data and/or the second configuration from a user via a user interface.

It shall be noted that the user interface may represent a DCS engineering tool.

Hence, there is provided a streamlined user interface for configuration changes.

According to a third aspect, there is provided a data processing apparatus for changing and/or storing configurations of a DCS running in a cloud-native infrastructure and associated with a production process in industrial plant. The data processing apparatus comprising a processor being configured to carry out the method of the first aspect, and/or to carry out the method of the second aspect.

The data processing apparatus according to the third aspect is advantageous in that it may participate in enabling for safely and/or securely changing a configuration of a DCS, in more detail for safely changing software- and/or hardware-components of the DCS. Hence, the data processing apparatus allows flexibly adapting a DCS Runtime Infrastructure of the DCS and applications in a safe manner. This is enabled since there is provided the ability to roll-back failed configuration changes quickly and to benefit from the GitOps paradigm in a DCS context. Moreover, it is enabled a shorter recovery time in case of software or hardware failures due to configuration changes, based on hardware failures being addressed with re-deployments in the cluster, for example. In addition, rolling back to a historic and potentially best suitable configuration is enabled. "Best suitable" for example with regard to a scheduled process to be performed at the plant.

According to a fourth aspect, there is provided a system or data processing system for changing and/or storing configurations of a distributed control system, DCS, running in a cloud-native infrastructure and associated with a production process in industrial plant. The system comprising a first data processing apparatus of the third aspect being configured to carry out the method of the first aspect, and/or a second data processing apparatus of the third aspect being configured to carry out the method of the second aspect, wherein the first data processing apparatus and the second data processing apparatus are communicatively connected. Additionally or alternatively, the system comprises means to carry out the method of the first aspect, and/or to carry out the method of the second aspect.

The system according to the fourth aspect is advantageous in that it may participate in enabling for safely and/or securely changing a configuration of a DCS, in more detail for safely changing software- and/or hardware-components of the DCS. Hence, the system allows flexibly adapting a DCS Runtime Infrastructure of the DCS and applications in a safe manner. This is enabled since there is provided the ability to roll-back failed configuration changes quickly and to benefit from the GitOps paradigm in a DCS context. Moreover, it is enabled a shorter recovery time in case of software or hardware failures due to configuration changes, based on hardware failures being addressed with re-deployments in the cluster, for example. In addition, rolling back to a historic and potentially best suitable configuration is enabled. "Best suitable" for example with regard to a scheduled process to be performed at the plant.

According to a fifth aspect, there is provided an industrial plant comprising a first data processing apparatus of the third aspect being configured to carry out the method of the first aspect, and/or a second data processing apparatus of the third aspect being configured to carry out the method of the second aspect, wherein the first data processing apparatus and the second data processing apparatus are communicatively connected, and/or a system of the fourth aspect.

By "industrial plant", according to several examples, it may be meant an industrial plant or industrial production plant comprising one or more pipelines, production lines and/or assembly lines for transforming one or more educts into a product and/or for assembling one or more components into a final product. According to several examples, it may be meant an industrial plant in oil industry, in gas industry or in chemical industry.

The industrial plant according to the fifth aspect is advantageous in that it may participate in enabling for safely and/or securely changing a configuration of a DCS, in more detail for safely changing software- and/or hardware-components of the DCS. Hence, the industrial plant allows flexibly adapting a DCS Runtime Infrastructure of the DCS and applications in a safe manner. This is enabled since there is provided the ability to roll-back failed configuration changes quickly and to benefit from the GitOps paradigm in a DCS context. Moreover, it is enabled a shorter recovery time in case of software or hardware failures due to configuration changes, based on hardware failures being addressed with re-deployments in the cluster, for example. In addition, rolling back to a historic and potentially best suitable configuration is enabled. "Best suitable" for example with regard to a scheduled process to be performed at the plant.

According to a sixth aspect, there is provided a computer-readable medium comprising instructions which, when executed by a computing system, cause the computing system to perform the method of the first aspect and/or to perform the method of the second aspect. The computer-readable medium may be transitory or non-transitory, volatile or non-volatile.

The computer-readable medium according to the sixth aspect is advantageous in that it may participate in enabling for safely and/or securely changing a configuration of a DCS, in more detail for safely changing software- and/or hardware-components of the DCS. Hence, the computer-readable medium allows flexibly adapting a DCS Runtime Infrastructure of the DCS and applications in a safe manner. This is enabled since there is provided the ability to roll-back failed configuration changes quickly and to benefit from the GitOps paradigm in a DCS context. Moreover, it is enabled a shorter recovery time in case of software or hardware failures due to configuration changes, based on hardware failures being addressed with re-deployments in the cluster, for example. In addition, rolling back to a historic and potentially best suitable configuration is enabled. "Best suitable" for example with regard to a scheduled process to be performed at the plant.

According to a seventh aspect, there is provided a computer program product comprising instructions which, when executed by a computing system, enable or cause the computing system to perform the method of the first aspect and/or to perform the method of the second aspect. The computer program product may comprise a computer-readable medium comprising instructions of the computer program product.

The computer program product according to the seventh aspect is advantageous in that it may participate in enabling for safely changing a configuration of a DCS, in more detail for safely and/or securely changing software- and/or hardware-components of the DCS. Hence, the computer program product allows flexibly adapting a DCS Runtime Infrastructure of the DCS and applications in a safe manner. This is enabled since there is provided the ability to roll-back failed configuration changes quickly and to benefit from the GitOps paradigm in a DCS context. Moreover, it is enabled a shorter recovery time in case of software or hardware failures due to configuration changes, based on hardware failures being addressed with re-deployments in the cluster, for example. In addition, rolling back to a historic and potentially best suitable configuration is enabled. "Best suitable" for example with regard to a scheduled process to be performed at the plant.

According to an eighth aspect, there is provided a use of a first data processing apparatus of the third aspect being configured to carry out the method of the first aspect, and/or of a second data processing apparatus of the third aspect being configured to carry out the method of the second aspect, and/or of a system of the fourth aspect, and/or of an industrial plant of the fifth aspect.

The use according to the eighth aspect is advantageous in that it may participate in enabling for safely and/or securely changing a configuration of a DCS, in more detail for safely changing software- and/or hardware-components of the DCS. Hence, the use allows flexibly adapting a DCS Runtime Infrastructure of the DCS and applications in a safe manner. This is enabled since there is provided the ability to roll-back failed configuration changes quickly and to benefit from the GitOps paradigm in a DCS context. Moreover, it is enabled a shorter recovery time in case of software or hardware failures due to configuration changes, based on hardware failures being addressed with re-deployments in the cluster, for example. In addition, rolling back to a historic and potentially best suitable configuration is enabled. "Best suitable" for example with regard to a scheduled process to be performed at the plant.

The method of the first aspect and/or of the second aspect may be computer implemented.

Optional features of the first aspect and/or of the second aspect may form part of any of the third to eighth aspects, mutatis mutandis.

The term "obtaining", as used herein, may comprise, for example, receiving from another system, device, or process; receiving via an interaction with a user; loading or retrieving from storage or memory; measuring or capturing using sensors or other data acquisition devices.

The term "determining", as used herein, encompasses a wide variety of actions, and may comprise, for example, calculating, computing, processing, deriving, investigating, looking up (e.g., looking up in a table, a database or another data structure), ascertaining, and the like. Also, "determining" may comprise receiving (e.g., receiving information), accessing (e.g., accessing data in a memory), and the like. Also, "determining" may comprise resolving, selecting, choosing, establishing and the like.

The indefinite article "a" or "an" does not exclude a plurality. In addition, the articles "a" and "an" as used herein should generally be construed to mean "one or more" unless specified otherwise or clear from the context to be directed to a singular form.

Unless specified otherwise, or clear from the context, the phrases "one or more of A, B and C", "at least one of A, B, and C", and "A, B and/or C" as used herein are intended to mean all possible permutations of one or more of the listed items. That is, the phrase "A and/or B" means (A), (B), or (A and B), while the phrase "A, B, and/or C" means (A), (B), (C), (A and B), (A and C), (B and C), or (A, B, and C).

The term "comprising" does not exclude other elements or steps. Furthermore, the terms "comprising", "including", "having" and the like may be used interchangeably herein.

The invention may include one or more aspects, examples or features in isolation or combination whether specifically disclosed in that combination or in isolation. Any optional feature or sub-aspect of one of the above aspects applies as appropriate to any of the other aspects.

The above-described aspects will become apparent from, and elucidated with, reference to the detailed description provided hereinafter.

### BRIEF DESCRIPTION OF THE DRAWINGS

A detailed description will now be given, by way of example only, with reference to the accompanying drawing, in which:
- Figure 1 shows a holistic view of System Orchestration;
- Figure 2 shows a GitOps Orchestration System according to several examples of the present disclosure;
- Figure 3 illustrates an example for a GitOps System Orchestrator flow according to several examples of the present disclosure;
- Figure 4 illustrates a flowchart indicative of a method according to several examples of the present disclosure; and
- Figure 5 illustrates a flowchart indicative of a method according to several examples of the present disclosure.

### DETAILED DESCRIPTION

Novel distributed control systems deployed in primarily virtualized IT infrastructures are undergoing continuous changes due to software updates or changing user requirements. Managing these changes is challenging and requires a holistic system orchestration approach. The specification disclosed here features, according to several examples, a GitOps Orchestrator System for Distributed Control Systems (DCSs). It may version configuration changes, may apply them in a safe manner, and may allow for quick roll-back of configurations to a previously working version in case of failures.

Hence, according to several examples of the present disclosure, to solve at least part of the drawbacks as identified above, the so-called "GitOps" technique is applied on a DCS running primarily in cloud-native infrastructure. The GitOps approach leverages a versioning repository and is embedded into a comprehensive system orchestration application that can manage systems, applications, security, and networks through various application programming interfaces (APIs). In this system, a user can alter a configuration of software- and hardware components via a DCS Engineering Tool, which synchronizes the changes with a versioning repository. The versioning repository keeps a history of previous configurations to easily roll-back an erroneous configuration change, for example. The versioning repository automatically notifies the system orchestration application about changes, which carefully checks the security of the configuration change, and deploys it into the runtime infrastructure if the check was successful.

Therefore, according to several examples of the present disclosure, there is provided a continuously running System Orchestration software application that is fed by a versioning repository, which keeps a history of configurations. The software application can apply the changes to the software- and hardware components in the system after performing careful security checks.

Hence, advantageous aspects provided by the present disclosure according to several examples comprise: GitOps applied to DCS software in the context of System Orchestration; a wide-spanning system orchestration approach for systems, networks, applications, and security, which is unlike Kubernetes-focused GitOps approaches for example; an informed security check for configuration changes based on DCS-specific information sources, which is unlike approaches in consumer IT for example; and a common user interface for configuration changes embedded into DCS engineering tools, which is unlike approaches in consumer IT for example.

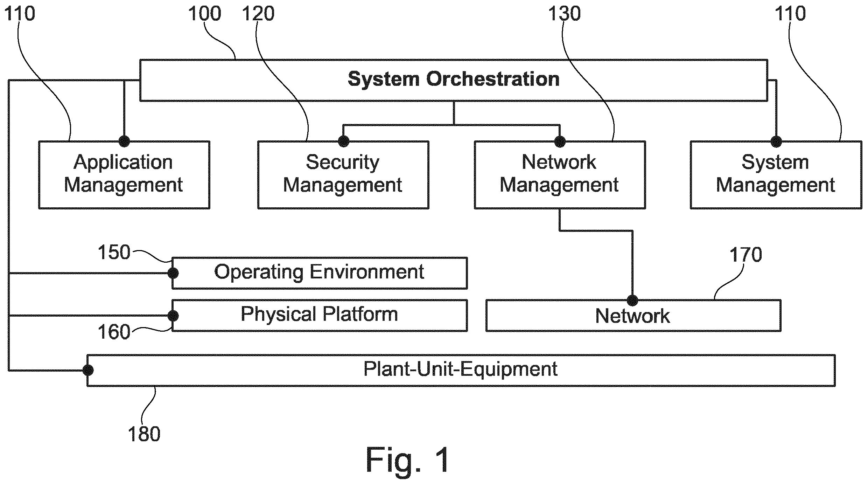

For cloud-native software systems running on virtual machines and software container deployments, the concept of System Orchestration has become critical to manage such system during inception, design, commissioning, runtime, maintenance, and decommissioning. System Orchestration as viewed in the following covers a broad range of areas. In view thereof, Figure 1 shows a holistic view of System Orchestration.

According to several examples of the present disclosure, System Orchestration 100 performs Application Management 110, which includes the installation, startup, (re-)deployment and stopping of application workloads. In cloud-native systems, such workloads include software containers (e.g., Docker) or orchestrated deployment configuration (e.g., in Kubernetes), where software containers are embedded. But for cloud-native distributed control systems, application software on resource constrained devices may not run in software containers, thus System Orchestration 100 also must deal with non-containerized application workloads. In DCSs, especially control logic execution runtimes (e.g., based on IEC 61131-3) are of particular interest.

System Orchestration 100 in this context also covers managing the (virtual) infrastructure underlying the application workloads. It includes for example setting up and configuring operating systems in virtual machines, interacting with physical host nodes to discover their capabilities, and attached devices, as well as setting up and managing other software that enables application workloads (e.g., container runtimes, container orchestration engines, system libraries, monitoring, and diagnostics tooling, etc.). The System Orchestration 100 can thus be connected to an Operating Environment 150 and a Physical Platform 160.

Furthermore, in the context of DCSs, System Orchestration 100 can connect to plant-unit equipment 180, e.g., Internet of Things (loT)-enabled sensors and actuators. This may include for example temperature transmitters, analyzer devices, motor starters, industrial drives, pumps, valves, etc. This capability allows System Orchestration 100 to discover and configure such devices for a given engineering configuration.

In cloud-native infrastructures, System Orchestration 100 also covers network management 130 for managing a network 170. Besides configuring physical network equipment remotely through APIs, it also can set up, configure, and monitor overlay networks on top of the regular communication protocols. Kubernetes for example, provides services and configuration options for these such a networking. System Orchestration 100 for example ensures through this kind of network configuration that the application workloads can communicate appropriately both with each other and with the plant-unit equipment 180 and meet any pre-scribed communication requirements.

System Orchestration 100 is also concerned with security management 120, as security incidents are increasingly threatening DCSs connected to the Internet and even if they are not connected. It for example ensures that application workloads use appropriate libraries without known vulnerabilities. Based on best practices and user requirements, it sets up security policies to be automatically enforced by algorithms. It continuously checks the entire configuration of the container orchestration for security incidents and communicates with specialized Security Incident and Event Management Systems (SIEM).

System Orchestration 100 is finally also concerned with system management 140.

Due to the broad range of functionality, System Orchestration 100 for cloud-native DCS is using models to describe the intended system configuration at design time. These models are formulated in a declarative manner in notations (e.g., YAML, XML) that can be processed by a so-called System Orchestrator, i.e., a continuously running software agent to interface with application management APIs, network management APIs, security management APIs, and system management APIs. The APIs may for example include SSH-servers or NETCONF endpoints to be able to install software and configure network switches. The APIs may also contain Kubernetes interfaces to manage and monitor container workloads.

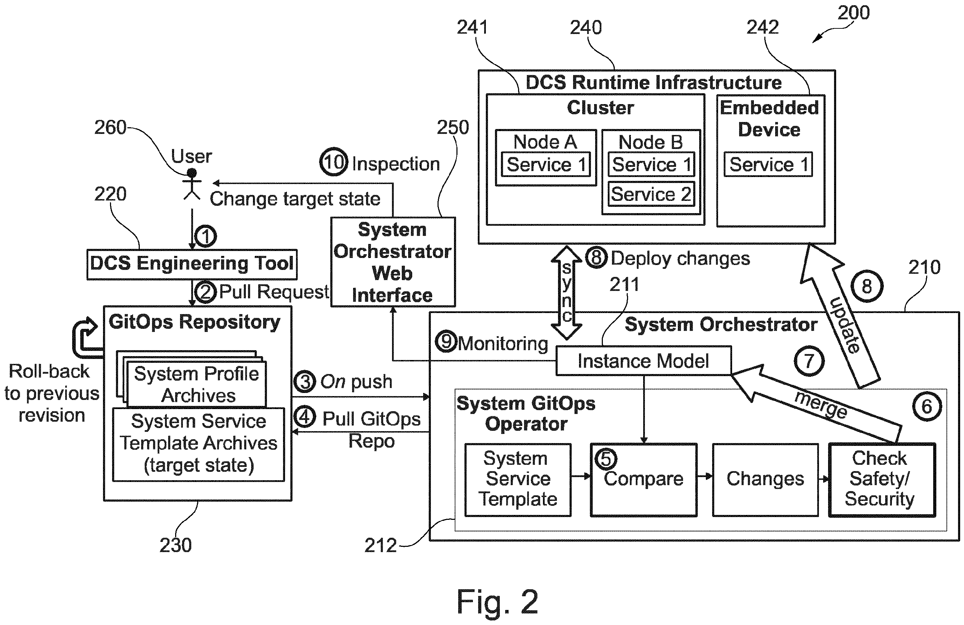

Referring now to Figure 2, Figure 2 shows a GitOps Orchestration System according to several examples of the present disclosure.

The system 200 described in the following may comprise a special System Orchestrator 210 for cloud-native DCSs that may include non-containerized workloads. The system 200 may further comprise a DCS engineering tool 220, a Git Repository or Versioning Repository 230, a DCS runtime infrastructure 240 and a system orchestrator web interface 250. It shall be noted that Git is a specific repository/versioning technology, and others could also be used with the GitOps paradigm. Thus, the Git Repository 230 according to several examples of the present disclosure may be understood to be a more generic "version control system", "revision control system" and/or "versioning repository of a version control system".

The system 200 may be especially characterized through its application of the GitOps paradigm in this context. GitOps prescribes to manage application or infrastructure configuration models via a versioning repository (e.g., Git) and automatically synchronizing committed changes to the models with the actual applications or infrastructure. The System Orchestrator 210 described in the following extends the GitOps concept that is typically used for container orchestration systems to all areas covered by system orchestration 100 as described above with reference to Figure 1, including application management 110, security management 120, network management 130, and system management 140. This means for example that also network switches and security policies may be managed using the GitOps paradigm. Furthermore, according to several examples of the present disclosure, the proposed GitOps System Orchestrator 210 is integrated with existing DCS engineering tools and carefully performs safety and security checks upon configuration changes to not interfere with production processes in a harmful manner.

Figure 2 shows a schematic overview of the GitOps System Orchestrator 210 connected to the versioning repository 230 and the DCS runtime infrastructure 240 according to several examples of the present disclosure. In this context, the GitOps System Orchestrator 210 may consist, among others, at least of the following components:
Instance Model 211: The instance model 211 is a comprehensive model covering the physical/virtual infrastructure, deployed application software, enforced security policies, and configure networks of a DCS. The instance model 211 is continuously synchronized with the DCS runtime infrastructure 240, i.e., the instance model 211 reflects the live state of the DCS, e.g., the instance model 211 models on which nodes specific application workloads are deployed or which security policies are currently violated. As a DCS may include embedded systems not managed by a container orchestration system, the instance model 211 may cover much more information than for example a typical Kubernetes database. However, the instance model 211 can be implemented with similar means as for Kubernetes, for example through a key-value store or database. The syntax of the instance model can for example follow the OASIS TOSCA notation and be serialized to YAML files.
System GitOps Operator 211: The System GitOps Operator 211 is a software agent according to the Operator pattern and monitors changes to the versioning repository 230. If a new configuration is detected, for example through a webhook into the versioning repository 230, the System GitOps Operator 211 pulls the new configuration from the GitOps repository 230 and compares it to the current instance model to calculate required changes (diffing). According to several examples of the present disclosure, the current instance model may comprise a current configuration of the DCS, and the current configuration may be understood to represent a first configuration. A result of the comparing may be a change model that for example may contain model elements prescribing the start of a new server or the re-deployment of an existing application software component. Changes can pertain any aspect of application management, security management, network management, and system management. The changes can range from minor configuration changes to vast updates to physical servers or system libraries used by many applications. According to several examples of the present disclosure, all such different changes may be referred to as changes to be applied on the current (or first) configuration of at least part of software components and/or hardware components of the DCS. With the change model, the System GitOps Operator 212 may perform a security check using additional information from the DCS. The System GitOps Operator 212 can make use of production process-specific data, for example out of Open Platform Communications Unified Architecture (OPC UA) servers. This may allow the System GitOps Operator 212 to appropriately schedule applying a change in a safe execution period or rejecting the committed change altogether to keep the production plant in safe conditions. Once the security check was successfully completed, the System Orchestrator 210 can merge the change model into the instance model 211 and deploy the changes into the DCS runtime infrastructure 240.
The DCS Runtime Infrastructure 240: The DCS runtime infrastructure 240 may consist of a server cluster 241 set up in a cloud-native fashion and optionally also embedded systems 242, such as automation controller or automation instruments. Despite the cloud-native deployment, the server cluster 241 is not necessarily hosted in a public cloud data center, but may preferably run in an on-premises deployment to also account for workloads that require short communication latencies on-site. According to several examples of the present disclosure, the DCS runtime infrastructure 240 provides APIs for application management, security management, network management, and system management with which the System GitOps Orchestrator 212 can connect to. Connected to the DCS runtime infrastructure but omitted in Figure 2 are additional controller, sensors, actuators, and input/output (I/O) -modules, which connect to a physical automation equipment in a process production plant.

A user 260 can interact with the GitOps Orchestration System 200 through one or more regular DCS engineering tools 220. The GitOps Orchestration System 200 for example may provide a live updating web view of its instance model 211, which can be embedded into DCS engineering tools 220, so that the user 260 has a single point of entry. In these DCS engineering tools 220, the user 260 can now change the desired target state of the system infrastructure configuration. I.e., according to several examples of the present disclosure, the user 260 may change the current configuration of the DCS to arrive at a target configuration of the DCS. Once the user has completed modeling the intended changes, these changes may get saved and pushed to the versioning repository 230 for versioning.

The Versioning Repository 230: The versioning repository 230 may manage current and previous versions of the system orchestration models. These current and previous versions may for example be specified in numerous YAML or XML files in a declarative manner. The versioning repository 230 needs no special customization for the system orchestration models, so many open-source or commercial versioning repositories can be used. A crucial benefit of the versioning and the GitOps paradigm as-such may be that the system configuration can easily be rolled back to a previous version, which also remains stored in the versioning repository 230, in case of erroneous or infeasible desired target states. This may allow quickly restoring a previously working configuration of the DCS and/or the DCS runtime infrastructure 240 directly through the versioning repository 230 in case the deployment of the changes by the GitOps Orchestrator 212 has led to a failure state.

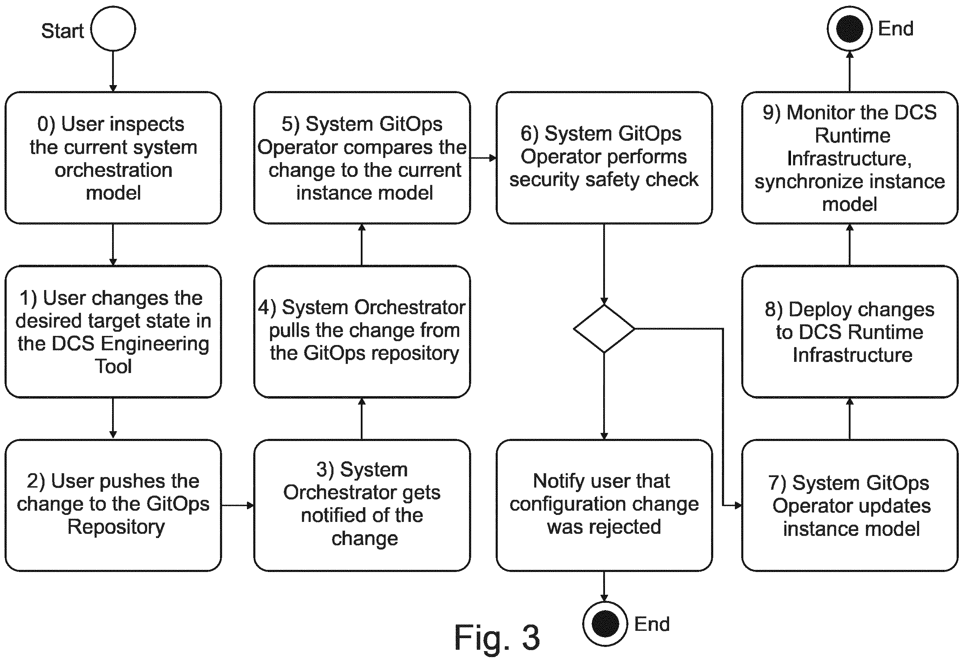

Referring to the process Steps 1 to 10 (referred to as S1 to S10 in the following) as illustrated in Figure 2, according to several examples of the present disclosure, these process steps are outlined in more detail in Figure 3, wherein Figure 3 illustrates an example for a GitOps System Orchestrator flow according to several examples of the present disclosure.

The flow may start with the user 260 inspecting the current system orchestration model. In S1, the user 260 may change the desired target state in the DCS engineering tool 220. In S2, the user 260 may push the change to the versioning repository 230. In S3, the System Orchestrator 210 may get notified of the change. In S4, the System Orchestrator 210 may pull the change from the versioning repository 230. In S5, the System GitOps Operator 212 may compare the change to the current instance model 211. In S6, the System GitOps Operator 212 may perform a security check. In case the configuration change may be rejected, the user 260 is notified that the configuration change was rejected and the flow ends. Otherwise, in case the configuration change may be accepted, in S7, the System GitOps Operator 212 merges the configuration change into the instance model 211. With further reference to S7, it has to be noted that the instance model 211 is solely based on the information gathered from the DCS runtime infrastructure 240. In S7, by performing the "merging the configuration change into the instance model 211", the instance model 211 is told what to expect, i.e., for example, which new nodes should be present, which should not be present any longer, etc. However, a state of such a node for example is solely based on information gathered from the actual DCS runtime infrastructure 240. It shall be noted that a component can be in different states including, for example, initial, configuring, configured, starting, started, paused, updating, stopping, stopped, deleted, etc. In S8, the System GitOps Operator 212 updates the DCS runtime infrastructure 240 by deploying the changes to the DCS runtime infrastructure 240. In S9, the system orchestrator 210 monitors the updated DCS runtime infrastructure 240 and synchronizes the instance model 211 with the updated DCS runtime infrastructure 240. The flow ends, wherein a system orchestrator web interface may be used by the user 260 in S10 for inspecting the updated DCS runtime infrastructure 240.

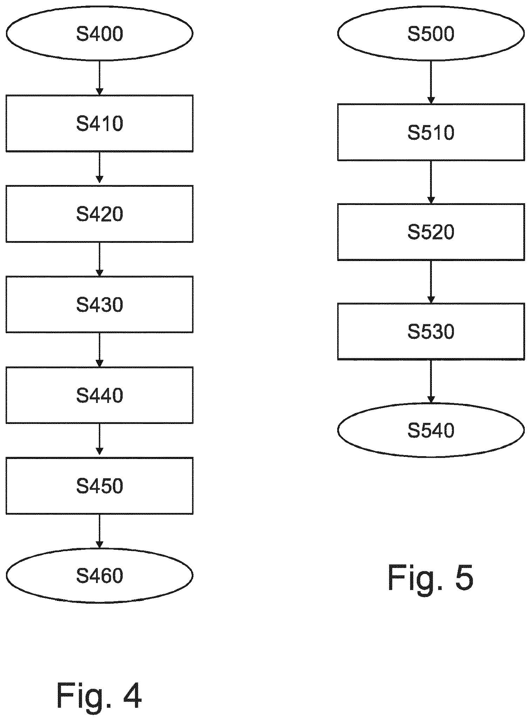

Referring now to Figure 4, Figure 4 illustrates a flowchart indicative of a method according to several examples of the present disclosure. The method is a method for changing a configuration of a DCS running in a cloud-native infrastructure and associated with a production process in industrial plant.

The method according to Figure 4 may be applied at such System Orchestrator 210 as shown with reference to Figure 2.

The method starts in S400. In S410, the method comprises obtaining, at the System Orchestrator 210 associated with the DCS and/or a DCS runtime infrastructure 240 of the DCS, wherein the DCS is in a first configuration, first data indicative of a second configuration to be applied at the DCS. The first configuration may be a current configuration and the second configuration may be a target configuration. The obtaining may be an automatic obtaining once the second configuration was published in a versioning repository 230. In S420, the method comprises applying changes on the first configuration based on the second configuration as a first target configuration. In S430, the method comprises, based on predetermined determination criteria, whether to reverse at least part of the applied changes. In S440, the method comprises, based on a result of the determining, obtaining second data indicative of a historic configuration of the DCS from a versioning repository 230 in which data indicative of historic configurations of the DCS comprising at least the first configuration are stored.

In S450, the method comprises reversing at least part of the applied changes based on using at least part of the obtained historic configuration as a second target configuration. The method ends in S460.

Referring now to Figure 5, Figure 5 illustrates a flowchart indicative of a method according to several examples of the present disclosure. The method is a method for storing configurations of a DCS running in a cloud-native infrastructure and associated with a production process in industrial plant.

The method according to Figure 5 may be applied at such versioning repository 230 as shown with reference to Figure 2.

The method starts in S500. In S510, the method comprises obtaining, at a versioning repository associated with the DCS, wherein the DCS is in a first configuration, first data indicative of a second configuration to be applied at the DCS. In S520, the method comprises storing the first data in a database comprising at least data indicative of the first configuration. In S530, the method comprises providing second data indicative of the second configuration to a system orchestrator. The method ends in S540.

According to several examples of the present disclosure, an example scenario for application of the GitOps Orchestration System 200 of Figure 2 is outlined below.

Namely, a user 260 checks a current system model, i.e. the system model of the DCS and/or the DCS runtime infrastructure 240, and decides that an additional OPC UA server should be deployed into the DCS runtime infrastructure 240. In the DCS engineering tool 220, the user 260 adds the desired target state of the OPC UA server and its specific version to the system orchestration model through a graphical user interface. The model is persisted as a YAML file and pushed to a versioning repository 230. The GitOps System Orchestrator 210 has registered a webhook on the versioning repository 230 and gets notified of the changed system orchestration model. The GitOps System Orchestrator 210 pulls the updated configuration and compares it to the current instance model 211. The result is that a new OPC UA server is required, and that sufficient computing and memory capacity is available in the DCS runtime infrastructure 240, as one of the computing nodes is currently underutilized. The System GitOps Operator 212 checks a plant production schedule of a plant associated with the DCS and/or the DCS runtime infrastructure 240 through another OPC UA server in the DCS runtime infrastructure 240 and finds that the production will be reconfigured in two hours, so that the desired target node will be idle. The System GitOps Operator 212 therefore determines it is safe to deploy the change in two hours and accepts it. After two hours, the System GitOps Operator 212 merges the change into the instance model 211, and the System GitOps Orchestrator 210 synchronizes the change with the DCS runtime infrastructure 240. For this, the System GitOps Orchestrator 210 issues a request to a Kubernetes API of the DCS runtime infrastructure 240 and commands the start of a new pod with the OPC UA server included as a container. While the pod is starting up, the GitOps Orchestrator instance model 211 is continuously updated with its state. The user 260 can monitor the state changes directly in the DCS engineering tool 220. After successful deployment and startup of the OPC UA server, the user 260 can start using it.

According to several examples of the present disclosure, there is provided a data processing apparatus for changing and/or storing configurations of a DCS running in a cloud-native infrastructure and associated with a production process in industrial plant. The data processing apparatus comprising a processor being configured to carry out the method of Figure 3, and/or of Figure 4, and/or of Figure 5.

In more detail, according to various examples, a first data processing apparatus being configured to carry out the method of Figure 4 may comprise a processing circuitry, a processing function, a processing means, a processing unit or a processor, which enables the data processing apparatus to participate in changing configurations of a DCS running in a cloud-native infrastructure and associated with a production process in industrial plant. The processor may comprise one or more processing portions or functions, wherein the processing portions or functions may be provided as one or more physical or virtual entities. The data processing apparatus may comprise one or more communication interfaces. The data processing apparatus may further comprise a memory or memory unit for storing data, programs and/or instructions to be executed by the processor. The memory may be a memory internal to the data processing apparatus or may be a memory external to the data processing apparatus, for example at a cloud server. The processor may comprise one or more portions, which enable the data processing apparatus to execute the method of Figure 4, for example. According to several examples of the present disclosure, an obtaining portion may be configured to perform such obtaining according to S410 of Figure 4, an applying portion may be configured to perform such applying according to S420 of Figure 4, a determining portion may be configured to perform such determining according to S430 of Figure 4, an obtaining portion may be configured to perform such obtaining according to S440 of Figure 4, and a reversing portion may be configured to perform such reversing according to S450 of Figure 4.

The portions may also be understood as representing means for carrying out the certain functions.

According to various examples, such first data processing apparatus may represent or function as such system orchestrator 210 as outlined above with reference to Figure 2.

Moreover, according to various examples, a second data processing apparatus being configured to carry out the method of Figure 5 may comprise a processing circuitry, a processing function, a processing means, a processing unit or a processor, which enables the data processing apparatus to participate in storing configurations of a DCS running in a cloud-native infrastructure and associated with a production process in industrial plant. The processor may comprise one or more processing portions or functions, wherein the processing portions or functions may be provided as one or more physical or virtual entities. The data processing apparatus may comprise one or more communication interfaces. The data processing apparatus may further comprise a memory or memory unit for storing data, programs and/or instructions to be executed by the processor. The memory may be a memory internal to the data processing apparatus or may be a memory external to the data processing apparatus, for example at a cloud server. The processor may comprise one or more portions, which enable the data processing apparatus to execute the method of Figure 5, for example. According to several examples of the present disclosure, an obtaining portion may be configured to perform such obtaining according to S510 of Figure 5, a storing portion may be configured to perform such storing according to S520 of Figure 5, and a providing portion may be configured to perform such providing according to S530 of Figure 5.

The portions may also be understood as representing means for carrying out the certain functions.

According to various examples, such second data processing apparatus may represent or function as such versioning repository 230 as outlined above with reference to Figure 2.

According to several examples of the present disclosure, there is provided a data processing system or system for changing and/or storing configurations of a DCS running in a cloud-native infrastructure and associated with a production process in industrial plant. The system comprising a first data processing apparatus as outlined above being configured to carry out the method of Figure 4, and/or a second data processing apparatus as outlined above being configured to carry out the method of Figure 5, wherein the first data processing apparatus and the second data processing apparatus are communicatively connected. Additionally or alternatively, the system comprises means to carry out the method of Figure 3, and/or of Figure 4, and/or of Figure 5.

According to various examples of the present disclosure, such system may represent or function as such system 200 as outlined above with reference to Figure 2.

According to several examples of the present disclosure, there is provided an industrial plant comprising a first data processing apparatus as outlined above, being configured to carry out the method of Figure 4, and/or a second data processing apparatus as outlined above being configured to carry out the method of Figure 5, wherein the first data processing apparatus and the second data processing apparatus are communicatively connected, and/or a system for changing and/or storing configurations of a DCS as outlined above.

According to several examples of the present disclosure, there is provided a computer-readable medium comprising instructions which, when executed by a computing system, cause the computing system to perform the method of Figure 3 and/or of Figure 4 and/or of Figure 5. The computer-readable medium may be transitory or non-transitory, volatile or non-volatile.

According to several examples of the present disclosure, there is provided a computer program product comprising instructions which, when executed by a computing system, enable or cause the computing system to perform the method of Figure 3 and/or of Figure 4 and/or of Figure 5. The computer program product may comprise a computer-readable medium comprising instructions of the computer program product.

According to several examples of the present disclosure, there is provided a use of a first data processing apparatus as outlined above, being configured to carry out the method of Figure 4, and/or of a second data processing apparatus as outlined above, being configured to carry out the method of Figure 5, and/or of a system for changing and/or storing configurations of a DCS as outlined above, and/or of an industrial plant as outlined above.

The method according to Figure 3 and/or Figure 4 and/or Figure 5 may be computer implemented.

Optional features of the methods according to Figure 3, Figure 4 and Figure 5 may form part of any of the data processing apparatus, the system, the industrial plant, the computer-readable medium, the computer program product, and the use, mutatis mutandis.

Any unit, module, circuitry or methodology described herein may be implemented using hardware, software, and/or firmware configured to perform any of the operations described herein. Hardware may comprise one or more processor cores, field-programmable gate arrays (FPGAs), application-specific integrated circuits (ASICs), application-specific standard products (ASSPs), system-on-a-chip systems (SOCs), complex programmable logic devices (CPLDs), etc. Software may be embodied as a software package, code, instructions, instruction sets and/or data recorded on at least one transitory or non-transitory computer readable storage medium. Firmware may be embodied as code, instructions or instruction sets and/or data hard-coded in memory devices (e.g., non-volatile memory devices).

If implemented in software, the functions can be stored on or transmitted over as one or more instructions or code on a computer-readable medium. Computer-readable media include computer-readable storage media. Computer-readable storage media can be any available storage media that can be accessed by a computer. By way of example, and not limitation, such computer-readable storage media can comprise FLASH storage media, RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal may be included within the scope of computer-readable storage media. Computer-readable media also includes communications media including any medium that facilitates transfer of a computer program from one place to another. A connection, for instance, can be a communications medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communications medium. Combinations of the above should also be included within the scope of computer-readable media.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features.

It has to be noted that embodiments of the invention are described with reference to different categories. In particular, some examples are described with reference to methods whereas others are described with reference to apparatus. However, a person skilled in the art will gather from the description that, unless otherwise notified, in addition to any combination of features belonging to one category, also any combination between features relating to different category is considered to be disclosed by this application. However, all features can be combined to provide synergetic effects that are more than the simple summation of the features.

While the invention has been illustrated and described in detail in the drawings and foregoing description, such illustration and description are to be considered exemplary and not restrictive. The invention is not limited to the disclosed embodiments. Other variations to the disclosed embodiments can be understood and effected by those skilled in the art, from a study of the drawings, the disclosure, and the appended claims.

The mere fact that certain measures are recited in mutually different dependent claims does not indicate that a combination of these measures cannot be used advantageously.

Any reference signs in the claims should not be construed as limiting the scope.

## Claims

1. A method for changing a configuration of a distributed control system, DCS, associated with a production process in industrial plant, the method comprising:
obtaining (S410), at a system orchestrator (210) associated with the DCS, wherein the DCS has a first configuration, first data indicative of a second configuration to be applied at the DCS;
applying (S420) changes on the first configuration based on the second configuration as a first target configuration;
determining (S430), based on predetermined determination criteria, whether to reverse at least part of the applied changes;
based on a result of the determining, obtaining (S440) second data indicative of a historic configuration of the DCS from a versioning repository (230) in which data indicative of historic configurations of the DCS comprising at least the first configuration are stored; and
reversing (S450) at least part of the applied changes based on using at least part of the obtained historic configuration as a second target configuration.

2. The method according to claim 1, wherein the applying comprises
comparing the second configuration to the first configuration;
based on the comparing, obtaining a change model indicative of the changes to be applied on the first configuration to arrive at the second configuration; and
applying at least part of the changes indicated in the change model and/or rejecting at least part of the changes indicated in the change model.

3. The method according to claim 1 or 2, further comprising
performing a security check regarding the changes to be applied on the first configuration based on considering at least one of production process data associated with the production process and DCS-specific information sources; and
performing the applying based on a result of the security check.

4. The method according to any of claims 1 to 3,
wherein the comparing comprises comparing the second configuration of software components and/or hardware components of the DCS to the first configuration of the software components and/or the hardware components of the DCS; and/or
wherein the changes to be applied on the first configuration to arrive at the second configuration comprise changes to be applied on the first configuration of at least part of software components and/or hardware components of the DCS to arrive at the second configuration for the at least part of the software components and/or the hardware components of the DCS; and/or
wherein the applying comprises changing the first configuration of at least part of software components and/or hardware components of the DCS, wherein the rejecting comprises maintaining the first configuration of at least part of the software components and/or the hardware components of the DCS.

5. The method according to any of claims 1 to 4, wherein the obtaining the first data comprises pulling the second configuration from the versioning repository (230).

6. The method according to any of claims 1 to 5,
wherein the comparing comprises comparing the second configuration to an instance model (211) which reflects a live state of the DCS and/or a DCS runtime infrastructure (240) associated with the DCS and which comprises the first configuration; and/or
wherein the applying comprises merging the change model into the instance model (211), and updating the DCS and/or the DCS runtime infrastructure (240) by synchronizing the changes indicated in the change model with the DCS and/or the DCS runtime infrastructure (240).

7. The method according to any of claims 1 to 6,
wherein the applying comprises scheduling application of at least part of the changes indicated in the change model under consideration of processing periods and/or idle periods of the production process; and/or
wherein the rejecting comprises rejecting at least part of the changes indicated in the change model under consideration of the processing periods and/or idle periods of the production process.

8. The method according to any of claims 1 to 7,
wherein the method further comprises applying the method in a GitOps Orchestration System (200); and/or
wherein the applying and/or rejecting comprises applying and/or rejecting changes in at least one area of areas covered by system orchestration (100), the areas comprising application management (110), security management (120), network management (130) and system management (140).

9. The method according to any of claims 1 to 8, further comprising, based on the applying, synchronizing changes applied on the first configuration with the versioning repository (230).

10. A method for storing configurations of a distributed control system, DCS, associated with a production process in industrial plant, the method comprising:
obtaining (S510), at a versioning repository (230) associated with the DCS, wherein the DCS is in a first configuration, first data indicative of a second configuration to be applied at the DCS;
storing (S520) the first data in a database comprising at least data indicative of the first configuration; and
providing (S530) second data indicative of the second configuration to a system orchestrator (210) associated with the DCS.

11. The method according to claim 10,
wherein the obtaining the first data comprises obtaining configuration changes to be applied on the first configuration; and/or
wherein the obtaining the first data comprises obtaining the first data and/or the second configuration from a user (260) via a user interface (220).

12. A data processing apparatus for changing and/or storing configurations of a distributed control system, DCS, associated with a production process in industrial plant, the data processing apparatus (210) comprising a processor being configured to carry out the method of any of claims 1 to 9, and/or the data processing apparatus (230) comprising a processor being configured to carry out the method of claim 10 or 11.

13. A system (200) for changing and/or storing configurations of a distributed control system, DCS, associated with a production process in industrial plant, the system comprising a first data processing apparatus (210) of claim 12 being configured to carry out the method of any of claims 1 to 9, and/or a second data processing apparatus (230) of claim 12 being configured to carry out the method of claim 10 or 11, wherein the first data processing apparatus (210) and the second data processing apparatus (230) are communicatively connected, and/or the system (200) comprising means to carry out the method of any of claims 1 to 9, and/or to carry out the method of claim 10 or 11.

14. A computer-readable medium comprising instructions which, when executed by a computing system, cause the computing system to perform the method of any of claims 1 to 9, and/or to perform the method of claim 10 or 11.

15. A computer program product comprising instructions which, when executed by a computing system, enable and/or cause the computing to perform the method of any of claims 1 to 9, and/or to perform the method of claim 10 or 11.
